# EUROPEAN PATENT SPECIFICATION

(11) **EP 3 640 293 B1**
(45) Date of publication and mention of the grant of the patent: **30.03.2022**
(21) Application number: 18816706.8
(22) Date of filing: 22.02.2018
(51) Int. Cl.: C08L 21/00, B60C 1/00, C08K 3/04, C08K 3/36, C08K 5/3492, C08L 61/00

(54) **RUBBER COMPOSITION, BELT-COATING RUBBER, AND TIRE**
KAUTSCHUKZUSAMMENSETZUNG, RIEMENBESCHICHTUNGSKAUTSCHUK UND REIFEN
COMPOSITION DE CAOUTCHOUC, CAOUTCHOUC DE REVÊTEMENT DE CEINTURE, ET PNEUMATIQUE

(30) Priority: 14.06.2017 JP 2017117090
(43) Date of publication of application: 22.04.2020
(73) Proprietor: Bridgestone Corporation, Tokyo 104-8340 (JP)
(72) Inventor: AMIYA Motoki, Tokyo 104-8340 (JP); NUKAGA Hideyuki, Tokyo 104-8340 (JP)
(74) Representative: Oxley, Robin John George
(86) International application number: PCT/JP2018/006522
(87) International publication number: WO 2018/230048

(56) References cited:
- EP-A1- 0 751 178
- EP-A1- 2 316 881
- CA-A- 554 161
- JP-A- 2012 077 136
- JP-A- 2012 233 139
- JP-A- 2013 006 998
- JP-A- 2015 054 927
- US-A1- 2012 296 027
- US-A1- 2015 306 921

## Description

### TECHNICAL FIELD

The present disclosure relates to a rubber composition, a belt coating rubber, and a tire.

### BACKGROUND

Generally, a tire requiring strength may include a carcass layer composed of a cord buried along the meridian direction of a ring-shaped tire body, and a belt disposed on the tire radial direction outer side of the carcass layer. The belt is usually formed of a plurality of belt layers obtained by covering a steel cord with a coating rubber (hereinafter, referred to as a "belt coating rubber" or a "coating rubber"), to apply load resistance and traction resistance and the like to the tire. The belt coating rubber requires high durabilities. Among them, the belt coating rubber requires particularly high crack growth resistance. Meanwhile, in recent years, from the viewpoint of an improvement in high fuel efficiency of an automobile, there is a growing demand for an improvement in the low loss property of the belt coating rubber in order to reduce the rolling resistance of the tire.

However, when the amount of carbon black blended with the belt coating rubber is reduced in order to improve the low loss property, crack resistance tends to be deteriorated. Accordingly, it has also been desired to develop a technique which can attain both low loss property and crack growth resistance.

In order to solve the problems, for example, Patent Literature 1 discloses a technique of producing a rubber composition using a Wet masterbatch prepared using specific grade carbon black to improve the dispersibility of surface-treated carbon black.

### CITATION LIST

### Patent Literature

PTL 1: Japanese Patent Laid-Open No. 2016-037547

### SUMMARY

### (Technical Problem)

The technique of Patent Literature 1 could provide a certain level of effect of establishing both given low loss property and crack growth resistance. However, from the viewpoint of a further improvement in performance of the tire, it has also been desired to attain both low loss property and crack growth resistance on a higher level.

Therefore, an object of the present disclosure is to provide a rubber composition which can attain both low loss property and crack growth resistance on a high level. Another object of the present disclosure is to provide a belt coating rubber and a tire which have both low loss property and crack growth resistance attained on a high level.

### (Solution to Problem)

The present inventors attempted intensive study to solve the foregoing problems, and as a result, focused on that a ratio of a 200% modulus value to a 50% modulus value of a rubber composition is closely related to crack growth resistance. The present inventors attempted further intensive study, and as a result, found that the rubber composition contains specific carbon black, phenol resin, and methylene donor, and the ratio of the 200% modulus value to the 50% modulus value is set to a specific value (specifically 5.0) or less, which allows both low loss property and crack growth resistance to be attained on a higher level than that of the conventional technique.

The gist of the present disclosure is as follows.

A rubber composition of the present disclosure contains: a rubber component; carbon black having a DBP absorption of 50 to 100 cm³/100 g; a phenol resin; and a methylene donor, wherein a ratio of a 200% modulus value (M200) to a 50% modulus value (M50) is 5.0 or less (M200/M50 ≤ 5.0).

By the constitution, both low loss property and crack growth resistance can be attained on a high level.

In the rubber composition of the present disclosure, it is preferable that a nitrogen adsorption specific surface area of the carbon black is 70 to 90 m²/g. This is because low loss property and crack growth resistance can be further improved.

Furthermore, in the rubber composition of the present disclosure, it is preferable that a content of the carbon black is 35 to 45 parts by mass based on 100 parts by mass of the rubber component. This is because low loss property and crack growth resistance can be further improved.

In addition, it is preferable that the rubber composition of the present disclosure further contains silica. This is because low loss property and crack growth resistance can be further improved.

In the rubber composition of the present disclosure, it is preferable that the methylene donor is at least one selected from the group consisting of hexamethylenetetramine, hexamethoxymethylmelamine, hexamethoxymethylolmelamine, and paraformaldehyde. This is because low loss property and crack growth resistance can be further improved.

Furthermore, in the rubber composition of the present disclosure, it is preferable that a content of the phenol resin is 2 to 10 parts by mass based on 100 parts by mass of the rubber component. This is because low loss property and crack growth resistance can be further improved.

Furthermore, in the rubber composition of the present disclosure, it is preferable that a ratio of a content of the phenol resin to a content of the methylene donor is 0.6 to 7. This is because low loss property and crack growth resistance can be further improved.

A belt coating rubber of the present disclosure contains the above-mentioned rubber composition of the present disclosure.

By the constitution, both low loss property and crack growth resistance can be attained on a high level.

A tire of the present disclosure contains the above-mentioned rubber composition of the present disclosure.

By the constitution, both low loss property and crack growth resistance can be attained on a high level.

### (Advantageous Effect)

The present disclosure can provide a rubber composition which can attain both low loss property and crack growth resistance on a high level. The present disclosure can provide a belt coating rubber and a tire which have both low loss property and crack growth resistance attained on a high level.

### DETAILED DESCRIPTION

Hereinafter, an embodiment of the present disclosure will be specifically described.

### <Rubber Composition>

A rubber composition of the present disclosure contains: a rubber component; carbon black having a DBP absorption of 50 to 100 cm³/100 g; a phenol resin; and a methylene donor, wherein a ratio of a 200% modulus value (M200) to a 50% modulus value (M50) is 5.0 or less (M200/M50 ≤ 5.0).

The M50 is a parameter associated with elasticity in the low-strain region of a vulcanized rubber. Accordingly, the M50 needs to be set to a value as high as possible by adding a phenol resin and a methylene donor which will be described later while adjusting the kind and content of carbon black which will be described later in order to suppress the deformation of belt parts of a tire. Meanwhile, the M200 is a parameter associated with elasticity in the high-strain region of the vulcanized rubber. Accordingly, from the viewpoint of suppressing crack growth, the M200 needs to be set to a low value by adjusting the kind and content of carbon black which will be described later in order to alleviate the concentration of stress at crack tip. By setting a ratio of the magnitude of the M200 to that of the M50 to 5.0 or less (M200/M50 ≤ 5.0), excellent low loss property and crack growth resistance can be achieved. From the same viewpoints, the M200/M50 is preferably 4.8 or less, and more preferably 4.5 or less.

The 50% modulus means tensile stress when the elongation of the vulcanized rubber is 50%. The 200% modulus means tensile stress when the elongation of the vulcanized rubber is 200%. These values can be obtained by vulcanizing the rubber composition of the present disclosure, to obtain a vulcanized rubber, and thereafter performing measurement based on JIS K 6251 (2010). The vulcanization conditions of the rubber composition are not particularly limited, and the rubber composition can be appropriately vulcanized under known vulcanization conditions.

Furthermore, the specific numerical value ranges of the M50 and M200 are not particularly limited, but from the viewpoint of achieving low loss property and crack growth resistance on a higher level, it is preferable that the M50 is 1.6 or more and the M200 is 10.5 or less, and it is more preferable that the M50 is 1.8 or more and the M200 is 9.0 or less.

### (Rubber Component)

The rubber composition of the present disclosure contains a rubber component.

The constitution of the rubber component is not particularly limited, and can be appropriately changed depending on required performance. For example, from the viewpoint that excellent crack growth resistance and wear resistance can be obtained, the rubber composition may contain a natural rubber or a diene-based synthetic rubber alone, or may contain the natural rubber and the diene-based synthetic rubber in combination.

The rubber component may be composed of 100% of the diene-based rubber, but the rubber component may also contain rubbers other than the diene-based rubber within a range that does not impair the object of the present disclosure. From the viewpoint that excellent crack growth resistance can be obtained, the content of the diene-based rubber in the rubber component is preferably 30% by mass or more, more preferably 40% by mass or more, and still more preferably 50% by mass or more.

Here, examples of the diene-based synthetic rubber include a polybutadiene rubber (BR), an isoprene rubber (IR), a styrene butadiene rubber (SBR), a styrene isoprene butadiene rubber (SIBR), a chloroprene rubber (CR), and an acrylonitrile-butadiene rubber (NBR).

Examples of a non-diene-based rubber include an ethylenepropylenediene rubber (EPDM), an ethylenepropylene rubber (EPM), and a butyl rubber (IIR).

These synthetic rubbers may be used alone or in a blend of two or more. These rubbers may be modified with a modifying group.

### (Carbon Black)

The rubber composition of the present disclosure further contains carbon black in addition to the above-mentioned rubber component.

Here, the carbon black has a DBP (dibutyl phthalate) absorption of 50 to 100 cm³/100 g.

By using carbon black having a DBP absorption of 50 to 100 cm³/100 g, and a low structure, both the reinforcing property and appropriate flexibility of the rubber composition can be attained, which can provide excellent crack growth resistance. When the DBP absorption exceeds 100 cm³/100 g, the structure is high, so that the reinforcing property of the rubber composition becomes excessively high. This causes deteriorated flexibility, so that sufficient crack growth resistance cannot be obtained. The DBP absorption of the carbon black is preferably 90 cm³/100 g or less, and more preferably 80 cm³/100 g or less.

The structure of the carbon black means the magnitude of a structure (aggregate of carbon black particles) formed as a result of spherical carbon black particles being fused and connected.

The DBP absorption of the carbon black means an amount of DBP (dibutyl phthalate) absorbed by 100 g of the carbon black, and can be measured based on JIS K 6217-4 (2008).

The carbon black preferably has a nitrogen adsorption specific surface area (N₂SA) of 70 to 90 m²/g, and more preferably 75 to 85 m²/g. The structure of the carbon black can be further optimized, whereby low loss property and crack growth resistance can be further improved.

The nitrogen adsorption specific surface area can be measured by a single point method based on ISO4652-1. For example, the specific surface area (m²/g) can be can be calculated from a measured value obtained by immersing degassed carbon black in liquid nitrogen, and thereafter measuring an amount of nitrogen adsorbed on the surface of the carbon black at equilibrium.

Furthermore, the kind of the carbon black is not particularly limited except for having the above-mentioned DBP absorption. For example, any hard carbon produced by an oil furnace method can be used. Among these, from the viewpoint of achieving more excellent low loss property and crack growth resistance, HAF-grade carbon black is preferably used.

The content of the carbon black is preferably 35 to 45 parts by mass based on 100 parts by mass of the rubber component. The content of the carbon black is set to 35 parts by mass or more based on 100 parts by mass of the rubber component, whereby high reinforcing property and crack growth resistance can be obtained. The content of the carbon black is set to 45 parts by mass or less, whereby low loss property can be further improved.

### (Phenol Resin)

The rubber composition of the present disclosure further contains a phenol resin in addition to the above-mentioned rubber component and carbon black.

The rubber composition contains the phenol resin together with a methylene donor which will be described later, whereby the 50% modulus value (M50) of the rubber composition is increased to maintain excellent low loss property and to improve the reinforcing property of the rubber composition, which can achieve excellent crack growth resistance.

Here, the phenol resin is not particularly limited, and can be appropriately selected depending on required performance. Examples thereof include phenol resins produced by subjecting phenols such as phenol, cresol, resorcin, and tert-butylphenol or mixtures thereof and formaldehyde to a condensation reaction in the presence of an acid catalyst such as hydrochloric acid or oxalic acid. The phenol resins capable of being used are modified phenol resins. For example, the phenol resins can be modified by an oil such as a rosin oil, a tall oil, a cashew oil, linoleic acid, oleic acid, or linolenic acid.

The above-mentioned phenol resins may be contained alone or in the form of a mixture of a plurality of types.

The content of the phenol resin is preferably 2 to 10 parts by mass based on 100 parts by mass of the rubber component, and more preferably 3 to 7 parts by mass. The content of the phenol resin is set to 2 parts by mass or more based on 100 parts by mass of the rubber component, whereby crack growth resistance can be further improved. The content of the phenol resin is set to 10 parts by mass or less, whereby deterioration in low loss property can be suppressed.

### (Methylene Donor)

The rubber composition of the present disclosure further contains a methylene donor in addition to the above-mentioned rubber component, carbon black, and phenol resin.

The melamine donor is contained as a curing agent for the phenol resin, whereby the 50% modulus value (M50) of the rubber composition can be increased to maintain excellent low loss property and to improve the reinforcing property of the rubber composition.

Here, the methylene donor is not particularly limited, and can be appropriately selected depending on required performance. Examples thereof include hexamethylenetetramine, hexamethoxymethylolmelamine, pentamethoxymethylolmelamine, hexamethoxymethylmelamine, pentamethoxymethylmelamine, hexaethoxymethylmelamine, hexakis-(methoxymethyl)melamine, N,N',N"-trimethyl-N,N',N"-trimethylolmelamine, N,N',N"-trimethylolmelamine, N-methylolmelamine, N,N'-(methoxymethyl)melamine, N,N',N"-tributyl-N,N',N"-trimethylolmelamine, and paraformaldehyde. Among these methylene donors, at least one selected from the group consisting of hexamethylenetetramine, hexamethoxymethylmelamine, hexamethoxymethylolmelamine, and paraformaldehyde is preferable.

These methylene donors may be used alone or in combination.

The ratio of the content of the phenol resin to the content of the methylene donor is preferably 0.6 to 7, and more preferably 1 to 5 from the viewpoint of attaining both low loss property and crack growth resistance on a higher level. When the ratio of the content of the phenol resin to the content of the methylene donor is 0.6 or less, the M50 is not sufficiently increased, which may cause an insufficient improvement in crack growth resistance. Meanwhile, when the ratio exceeds 7, low loss property may be deteriorated.

### (Other Components)

The rubber composition of the present disclosure may contain other components in addition to the above-mentioned rubber component, carbon black, phenol resin, and methylene donor as long as the effect of the disclosure is not impaired.

As the other components, for example, additives usually used in the rubber industry such as a filler, an age resistor, a crosslinking accelerator, a crosslinking agent, a crosslinking accelerator aid, a silane coupling agent, stearic acid, an antiozonant, and a surfactant other than the carbon black may be appropriately contained.

Examples of the filler include silica and other inorganic filler.

Among these, it is preferable that silica is contained as the filler. This is because more excellent low loss property and crack growth resistance are obtained.

Examples of the silica include wet silica, colloidal silica, calcium silicate, and aluminum silicate.

Among these, the silica is preferably wet silica, and more preferably precipitated silica. This is because these silicas have high dispersibility to allow low loss property and wear resistance of the rubber composition to be further improved. The precipitated silica is obtained as a result of causing the reaction of a reaction solution to proceed in neutral to alkaline pH ranges at relatively high temperatures during the initial production to grow silica primary particles, and thereafter controlling the silica primary particles to an acidic side to aggregate the primary particles.

The content of the silica is not particularly limited, but from the viewpoint of achieving excellent low loss property, it is preferably 1 to 15 parts by mass based on 100 parts by mass of the rubber component, and more preferably 3 to 10 parts by mass.

For example, an inorganic compound represented by the following formula (I) can also be used as the inorganic filler.

nM.xSiO_{y}.zH₂O ... (I)

(In the formula, M is at least one selected from, a metal selected from the group consisting of aluminum, magnesium, titanium, calcium, and zirconium, and oxides or hydroxides of these metals, their hydrates and carbonates of the metals; and n, x, y, and z respectively represent an integer of 1 to 5, an integer of 0 to 10, an integer of 2 to 5, and an integer of 0 to 10.)

Examples of the inorganic compound represented by the formula (I) include alumina (Al₂O₃) such as γ-alumina or α-alumina; alumina monohydrate (Al₂O₃·H₂O) such as boehmite or diaspore; aluminum hydroxide [Al(OH)₃] such as gibbsite or bayerite; aluminum carbonate [Al₂(CO₃)₃], magnesium hydroxide [Mg(OH)₂], magnesium oxide (MgO), magnesium carbonate (MgCO₃), talc (3MgO·4SiO₂·H₂O), attapulgite (5MgO·8SiO₂·9H₂O), titanium white (TiO₂), titanium black (TiO₂ₙ₋₁), calcium oxide (CaO), calcium hydroxide [Ca(OH)₂], aluminum magnesium oxide (MgO·Al₂O₃), clay (Al₂O₃·2SiO₂), kaolin (Al₂O₃·2SiO₂·2H₂O), pyrophyllite (Al₂O₃·4SiO₂·H₂O), bentonite (Al₂O₃·4SiO₂·2H₂O), magnesium silicate (Mg₂SiO₄ or MgSiO₃ or the like), aluminum calcium silicate (Al₂O₃·CaO·2SiO₂ or the like), magnesium calcium silicate (CaMgSiO₄), calcium carbonate (CaCO₃), zirconium oxide (ZrO₂), zirconium hydroxide [ZrO(OH)₂·nH₂O] zirconium carbonate [Zr(CO₃)₂]; and crystalline aluminosilicate salts containing a charge-correcting hydrogen, alkali metal, or alkaline earth metal such as various types of zeolite.

As the age resistor, known age resistors can be used, and are not particularly limited. Examples thereof include a phenolic age resistor, an imidazole-based age resistor, and an amine-based age resistor. These age resistors may be used alone or in combination of two or more thereof.

As the crosslinking accelerator, known crosslinking accelerators can be used, and are not particularly limited. Examples thereof include thiazole-based vulcanization accelerators such as 2-mercaptobenzothiazole and dibenzothiazyl disulfide; sulfenamide-based vulcanization accelerators such as N-cyclohexyl-2-benzothiazyl sulfenamide and N-t-butyl-2-benzothiazyl sulfenamide; guanidine-based vulcanization accelerators such as diphenyl guanidine; thiuram-based vulcanization accelerators such as tetramethylthiuram disulfide, tetraethylthiuram disulfide, tetrabutylthiuram disulfide, tetradodecylthiuram disulfide, tetraoctylthiuram disulfide, tetrabenzylthiuram disulfide, and dipentamethylenethiuram tetrasulfide; dithiocarbamate-based vulcanization accelerators such as zinc dimethyldithiocarbamate; and zinc dialkyldithio phosphate.

The crosslinking agent is not particularly limited. Examples thereof include sulfur and a bismaleimide compound.

Examples of the kind of the bismaleimide compound include N,N'-o-phenylenebismaleimide, N,N'-m-phenylenebismaleimide, N,N'-p-phenylenebismaleimide, N,N'-(4,4'-diphenylmethane)bismaleimide, 2,2-bis-[4-(4-maleimidephenoxy)phenyl]propane, and bis(3-ethyl-5-methyl-4-maleimidephenyl)methane. In the present disclosure, N,N'-m-phenylenebismaleimide and N,N'-(4,4'-diphenylmethane)bismaleimide and the like can be suitably used.

Examples of the crosslinking accelerator aid include zinc oxide (ZnO) or a fatty acid. The fatty acid may be any of saturated or unsaturated, or linear or branched fatty acids. The number of carbon atoms of the fatty acid is not also particularly limited. Examples thereof include fatty acids having 1 to 30 carbon atoms, and preferably 15 to 30 carbon atoms. More specific examples thereof include naphthenic acids such as cyclohexanoic acid (cyclohexanecarboxylic acid) and alkylcyclopentane having a side chain; saturated fatty acids such as hexanoic acid, octanoic acid, decanoic acid (including a branched carboxylic acid such as neodecanoic acid), dodecanoic acid, tetradecanoic acid, hexadecanoic acid, and octadecanoic acid (stearic acid); unsaturated fatty acids such as methacrylic acid, oleic acid, linoleic acid, and linolenic acid; and resin acids such as rosin, toll oil acid, and abietic acid. These may be used alone or in combination of two or more thereof. In the present disclosure, zinc oxide and stearic acid can be suitably used.

It is preferable that, when silica is contained as the filler, a silane coupling agent is further contained. This is because the effects of the reinforcing property and low loss property provided by the silica can further improved. As the silane coupling agent, known silane coupling agents can be appropriately used. A preferable content of the silane coupling agent is different depending on the kind of the silane coupling agent, and the like, but it is preferably within a range of 2 to 25% by mass with respect to the silica, more preferably within a range of 2 to 20% by mass, and particularly preferably 5 to 18% by mass. The content of less than 2% by mass is less likely to sufficiently exhibit an effect as a coupling agent. The content exceeding 25% by mass may cause the gelling of the rubber component.

### <Method for Producing Rubber Composition>

Next, a method for producing a rubber composition of the present disclosure will be described.

The method for producing a rubber composition of the present disclosure is not particularly limited, and can be obtained by blending components (a rubber component, carbon black, a phenol resin, a methylene donor, and other components) constituting the rubber composition, followed by kneading.

In the method for producing the rubber composition of the present disclosure, the components may also be simultaneously kneaded, or any of the components may be preliminarily kneaded, followed by kneading the remaining components. These conditions can be appropriately changed depending on performance required for the rubber composition.

For example, from the viewpoint of achieving more excellent low loss property and crack growth resistance, the rubber component and the carbon black are preferably blended before being kneaded with the phenol resin, followed by kneading. The phenol resin has a strong interaction with the carbon black, which may cause a decreased reaction between the rubber component and the carbon black when the phenol resin and the carbon black are simultaneously introduced. Accordingly, by blending the rubber component and the carbon black before being kneaded with the phenol resin, followed by kneading, the dispersibility and reinforcing property of the carbon black are improved, which can provide further improvements in low loss property and crack growth resistance.

### <Belt Coating Rubber>

A belt coating rubber of the present disclosure contains the above-mentioned rubber composition of the present disclosure. The rubber composition of the present disclosure is used as the belt coating rubber of the tire, whereby the obtained belt coating rubber can have excellent low loss property and crack growth resistance.

### <Tire>

A tire of the present disclosure contains the above-mentioned rubber composition of the present disclosure. The rubber composition of the present disclosure is used as a tire material, whereby the obtained tire can have excellent low loss property and crack growth resistance.

In the tire of the present disclosure, the above-mentioned rubber composition is specifically applied to any of the members, but among the members for tires, the rubber composition is preferably applied to the belt coating rubber as described above. Examples of gases with which the tire of the present disclosure is filled include regular air, air with adjusted oxygen partial pressure, or inert gases such as nitrogen.

### EXAMPLES

Hereinafter, the present disclosure will be described in more detail by way of Examples. However, the present disclosure is not in any way limited by the following Examples. Data of Examples and Comparative Examples include predicted test results.

### <Examples 1 to 5 and 7, Comparative Examples 1 to 9>

Samples of rubber compositions were prepared by blending components illustrated in Table 1 according to an ordinary method, followed by kneading. The components were kneaded in a Banbury mixer having a volume of 3.0 L. In Example 7, a phenol resin, a rubber component, and carbon black were simultaneously kneaded. Meanwhile, in an example in which other phenol resin was blended, a rubber component and carbon black were kneaded before being kneaded with the resin.

A tire having a two-layer belt using the rubber of above each samples as a belt coating rubber was produced, and the rubber existed between the steel cords was taken out. After the surface of the rubber was polished smoothly, a dumbbell-shaped test piece is punched out along the tire circumferential direction, a tensile test is performed according to JIS K 6251, and tensile stress when giving 50% and 200% elongation (M50, M200) is measured.

### <Evaluation>

Each of the samples of the prepared rubber compositions of Examples and Comparative Examples was subjected to the following evaluations.

### (1) Low Loss Property

The rubber composition of each of the samples was vulcanized at 145°C for 40 minutes to obtain a vulcanized rubber. Loss tangent (tan δ) was measured for the obtained vulcanized rubber using a spectrometer (manufactured by Ueshima Seisakusho Co., Ltd.) under conditions of a temperature of 24°C, a strain of 1%, and a frequency of 52 Hz. For the evaluation of the rubber composition, the loss tangent (tan δ) of the rubber composition is expressed by an index when the loss tangent (tan δ) of the sample of Comparative Example 1 is taken as 100. The smaller index value means more excellent low heat generating property. The evaluation results are illustrated in Table 1.

### (2) Crack growth resistance

The rubber composition of each of the samples was vulcanized at 145°C for 40 minutes, to obtain a vulcanized rubber. From the obtained vulcanized rubber, a sheet of 2 mm × 50 mm × 6 mm was produced, and a minute hole as initial crack was formed in the central part of the sheet. Then, a repeated stress was applied to the sheet in a long side direction under conditions of 2.0 MPa, a frequency of 6 Hz, and an atmosphere temperature of 80°C. The repeated stress was applied to each of the samples, and the repeat number of times until the specimen fractures was then measured. Thereafter, the common logarithm of the repeat number of times was calculated. The measurement test until the fractured was conducted four times for each of the samples to calculate the common logarithms, and the average thereof was taken as an average common logarithm.

For the evaluation of the rubber composition, the average common logarithm of the rubber composition is expressed by an index when the average common logarithm of Comparative Example 1 is taken as 100. The larger average common logarithm of the sample means more excellent crack growth resistance. The evaluation results are illustrated in Table 1.

**[Table 1]**

| | | Comparative Examples | | | | | | | | | Examples | | | | | |
|---|---|---|---|---|---|---|---|---|---|---|---|---|---|---|---|---|
| | | 1 | 2 | 3 | 4 | 5 | 6 | 7 | 8 | 9 | 1 | 2 | 3 | 4 | 5 | 7 |
| | Natural rubber | 100 | 100 | 100 | 100 | 100 | 100 | 100 | 100 | 100 | 100 | 100 | 100 | 100 | 80 | 100 |
| | Butadiene rubber | - | - | - | - | - | - | - | - | - | - | - | - | - | 20 | - |
| | Carbon black A ^{*1} | 50 | 40 | 40 | 40 | 30 | - | - | 40 | - | 40 | 40 | 40 | 40 | 40 | 40 |
| | Carbon black B ^{*2} | - | - | - | - | - | 50 | 50 | - | - | - | - | - | - | - | - |
| | Carbon black C ^{*12} | | | | | | | | | 40 | | | | | | |
| Component composition (ratio of each component based on 100 parts by mass of rubber component) | Phenol resin A ^{*3} knead rubber component and carbon black prior to resin | - | - | 6 | 3 | 5 | - | - | - | 5 | 5 | 6 | 5 | 5 | 6 | - |
| | Phenol resin A simultaneously knead resin, rubber component, and carbon black | - | - | - | - | - | - | - | - | - | - | - | - | - | - | 5 |
| | Phenol resin B ^{*4} knead rubber component and carbon black prior to resin | - | - | - | - | - | - | - | - | - | - | - | - | - | - | - |
| | Hexamethoxymethylmelamine ^{*}5 | - | - | 6 | 2 | 3 | - | 3 | 3 | 3 | 3 | 2 | 3 | 3 | 2 | 3 |
| | Silica ^{*6} | - | - | - | - | - | - | - | - | 8 | 8 | 8 | 4 | - | 4 | 8 |
| | Zinc oxide | 8 | 8 | 8 | 8 | 8 | 8 | 8 | 8 | 8 | 8 | 8 | 8 | 8 | 8 | 8 |
| | Age resistor A ^{*7} | 2 | 2 | 2 | 2 | 2 | 2 | 2 | 2 | 2 | 2 | 2 | 2 | 2 | 2 | 2 |
| | Age resistor B ^{*8} | 1 | 1 | 1 | 1 | 1 | 1 | 1 | 1 | 1 | 1 | 1 | 1 | 1 | 1 | 1 |
| | Sulfur | 6 | 6 | 6 | 6 | 6 | 6 | 6 | 6 | 6 | 6 | 6 | 6 | 6 | 6 | 6 |
| | Vulcanization accelerator ^{*9} | 1 | 1 | 1 | 1 | 1 | 1 | 1 | 1 | 1 | 1 | 1 | 1 | 1 | 1 | 1 |
| | Cobalt salt ^{*10} | 1 | 1 | 1 | 1 | 1 | 1 | 1 | 1 | 1 | 1 | 1 | 1 | 1 | 1 | 1 |
| | Bismaleimide ^{*11} | 1 | 1 | 1 | 1 | 1 | 1 | 1 | 1 | 1 | 1 | 1 | 1 | 1 | 1 | 1 |
| Modulus | M50 | 1.8 | 1.3 | 2.5 | 1.7 | 1.2 | 1.4 | 2.1 | 1.3 | 2.4 | 2.2 | 2.3 | 2.1 | 1.9 | 1.9 | 1.8 |
| | M200 | 11.0 | 8.0 | 13.5 | 9.5 | 8.0 | 9.2 | 12.0 | 7.8 | 12.6 | 10.1 | 9.8 | 9.8 | 9.5 | 9.3 | 9.0 |
| | M200/M50 | 6.1 | 6.2 | 5.4 | 5.6 | 6.7 | 6.4 | 5.7 | 6.0 | 5.3 | 4.6 | 4.3 | 4.7 | 5.0 | 4.9 | 5.0 |
| Evaluation | Low loss property | 100 | 80 | 87 | 83 | 76 | 67 | 70 | 82 | 86 | 84 | 87 | 84 | 82 | 82 | 83 |
| | Crack growth resistance | 100 | 80 | 95 | 95 | 85 | 79 | 78 | 84 | 94 | 105 | 105 | 103 | 102 | 100 | 100 |

| | | | | | | | | | | | | | | | | |
|---|---|---|---|---|---|---|---|---|---|---|---|---|---|---|---|---|
| [0054] ^{∗}1 HAF-grade carbon black, "Asahi #70L" manufactured by Asahi Carbon Co., Ltd., DBP absorption: 75 cm³/100 g, nitrogen adsorption specific surface area: 81m²/g ^{∗}2 GPF-grade carbon black, "Asahi NPG" manufactured by Asahi Carbon Co., Ltd., DBP absorption: 89 cm³/100 g, nitrogen adsorption specific surface area: 28 m²/g ^{∗}3 "SUMILITE resin PR-50235" manufactured by Sumitomo Bakelite Co., Ltd. ^{∗}4 "SUMILITE resin PR-51587" manufactured by Sumitomo Bakelite Co., Ltd. ^{∗}5 "CYREZ 964" manufactured by ALLNEX ^{∗}6 "Nipsil AQ" manufactured by Tosoh Silica Corporation, nitrogen adsorption specific surface area = 210 m²/g ^{∗}7 "NOCRAC NS-6" manufactured by Ouchi Shinko Chemical Industrial Co., Ltd., 2,2'-methylenebis(4-methyl-6-tert-butylphenol) ^{∗}8 "NOCRAC 6C" manufactured by Ouchi Shinko Chemical Industrial Co., Ltd., N-(1,3-dimethylbutyl)-N'-phenyl-p-phenylenediamine ^{∗}9 "NOCCELER DZ" manufactured by Ouchi Shinko Chemical Industrial Co., Ltd., N,N-dicyclohexyl-2-benzothiazolylsulfenamide ^{∗}10 "MANOBOND C" manufactured by OM Group, Inc., composite salt in which organic acid in organic cobalt salt is partially replaced by boric acid, cobalt content: 22.0% by mass ^{∗}11 "BMI-RB" manufactured by Daiwa Kasei Co., Ltd. ^{∗}12 HAF-grade carbon black, "Asahi #70" manufactured by Asahi Carbon Co., Ltd., DBP absorption: 101 cm³/100 g, nitrogen adsorption specific surface area: 77 m²/g | | | | | | | | | | | | | | | | |

From the results of Table 1, it was found that each of the samples of Examples exhibits both more excellent low loss property and crack growth resistance values with a proper balance than those of each of the samples of Comparative Examples.

### INDUSTRIAL APPLICABILITY

The present disclosure can provide a rubber composition which can attain both low loss property and crack growth resistance on a high level. Furthermore, the present disclosure can provide a belt coating rubber and a tire which have both low loss property and crack growth resistance attained on a high level.

## Claims

1. A rubber composition comprising:
a rubber component;
carbon black having a DBP absorption of 50 to 100 cm³/100 g;
a phenol resin; and
a methylene donor,
wherein a ratio of a 200% modulus value (M200) to a 50% modulus value (M50) is 5.0 or less (M200/M50 ≤ 5.0).

2. The rubber composition according to claim 1, wherein a nitrogen adsorption specific surface area of the carbon black is 70 to 90 m²/g.

3. The rubber composition according to claim 1 or 2, wherein a content of the carbon black is 35 to 45 parts by mass based on 100 parts by mass of the rubber component.

4. The rubber composition according to any one of claims 1 to 3, further comprising silica.

5. The rubber composition according to any one of claims 1 to 4, wherein the methylene donor is at least one selected from the group consisting of hexamethylenetetramine, hexamethoxymethylmelamine, hexamethoxymethylolmelamine, and paraformaldehyde.

6. The rubber composition according to any one of claims 1 to 5, wherein a content of the phenol resin is 2 to 10 parts by mass based on 100 parts by mass of the rubber component.

7. The rubber composition according to any one of claims 1 to 6, wherein a ratio of a content of the phenol resin to a content of the methylene donor is 0.6 to 7.

8. A belt coating rubber comprising the rubber composition according to any one of claims 1 to 7.

9. A tire comprising the rubber composition according to any one of claims 1 to 7.

## Patentansprüche

1. Kautschukzusammensetzung umfassend:
eine Kautschukkomponente;
Ruß, der eine DBP-Absorption von 50 bis 100 cm³/100 g aufweist;
ein Phenolharz; und
einen Methylendonor,
wobei ein Verhältnis eines Modulwerts von 200 % (M200) zu einem Modulwert von 50 % (M 50) 5,0 oder weniger (M200/M 50 ≤ 5,0) beträgt.

2. Kautschukzusammensetzung nach Anspruch 1, wobei ein Stickstoffabsorptionspezifischer Oberflächenbereich des Rußes 70 bis 90 m²/g beträgt.

3. Kautschukzusammensetzung nach Anspruch 1 oder 2, wobei ein Gehalt des Rußes 35 bis 45 Masseteile, auf 100 Masseteile der Kautschukkomponente bezogen, beträgt.

4. Kautschukzusammensetzung nach einem der Ansprüche 1 bis 3, ferner Siliciumdioxid umfassend.

5. Kautschukzusammensetzung nach einem der Ansprüche 1 bis 4, wobei der Methylendonor mindestens einer ist ausgewählt aus der Gruppe bestehend aus Hexamethylentetramin, Hexamethoxymethylmelamin, Hexamethoxymethylolmelamin und Parafomraldehyd.

6. Kautschukzusammensetzung nach einem der Ansprüche 1 bis 5, wobei ein Gehalt des Phenolharzes 2 bis 10 Masseteile, auf 100 Masseteile der Kautschukkomponente bezogen, beträgt.

7. Kautschukzusammensetzung nach einem der Ansprüche 1 bis 6, wobei ein Verhältnis eines Gehalts des Phenolharzes zu einem Gehalt des Methylendonors 0,6 bis 7 beträgt.

8. Riemenbeschichtungskautschuk umfassend die Kautschukzusammensetzung nach einem der Ansprüche 1 bis 7.

9. Reifen umfassend die Kautschukzusammensetzung nach einem der Ansprüche 1 bis 7.

## Revendications

1. Composition de caoutchouc comprenant:
un composant de caoutchouc;
du noir de carbone ayant une absorption DBP de 50 à 100 cm³/100 g;
une résine de phénol; et
un donneur de méthylène,
un rapport d'une valeur de module à 200 % (M200) à une valeur de module à 50 % (M50) étant de 5,0 ou moins (M200/M50 < 5,0).

2. Composition de caoutchouc selon la revendication 1, une surface spécifique d'adsorption d'azote du noir de carbone étant de 70 à 90 m²/g.

3. Composition de caoutchouc selon la revendication 1 ou 2, une teneur du noir de carbone étant de 35 à 45 parties en masse sur la base de 100 parties en masse du composant de caoutchouc.

4. Composition de caoutchouc selon l'une quelconque des revendications 1 à 3, comprenant en outre de la silice.

5. Composition de caoutchouc selon l'une quelconque des revendications 1 à 4, le donneur de méthylène étant au moins l'un sélectionné parmi le groupe constitué de l'hexaméthylènetétramine, de l'hexaméthoxyméthylmélamine, de l'hexaméthoxyméthylolmélamine, et du paraformaldéhyde.

6. Composition de caoutchouc selon l'une quelconque des revendications 1 à 5, une teneur de la résine de phénol étant de 2 à 10 parties en masse sur la base de 100 parties en masse du composant de caoutchouc.

7. Composition de caoutchouc selon l'une quelconque des revendications 1 à 6, un rapport d'une teneur de la résine de phénol à une teneur du donneur de méthylène étant de 0,6 à 7.

8. Caoutchouc de revêtement de courroie comprenant la composition de caoutchouc selon l'une quelconque des revendications 1 à 7.

9. Pneumatique comprenant la composition de caoutchouc selon l'une quelconque des revendications 1 à 7.
